**Europäisches Patentamt**

**European Patent Office**

**Office européen des brevets**

(19)

(11) Veröffentlichungsnummer : **0 187 921 B2**

(12) # NEUE EUROPÄISCHE PATENTSCHRIFT

(45) Veröffentlichungstag der neuen Patentschrift :
**30.09.92 Patentblatt 92/40**

(51) Int. Cl.⁵ : **H01G 1/11**

(21) Anmeldenummer : **85114764.5**

(22) Anmeldetag : **21.11.85**

(54) **Elektrischer Kondensator.**

(30) Priorität : **26.11.84 DE 3443059**
**04.12.84 DE 3444224**

(43) Veröffentlichungstag der Anmeldung :
**23.07.86 Patentblatt 86/30**

(45) Bekanntmachung des Hinweises auf die
Patenterteilung :
**17.05.89 Patentblatt 89/20**

(45) Bekanntmachung des Hinweises auf die
Entscheidung über den Einspruch :
**30.09.92 Patentblatt 92/40**

(84) Benannte Vertragsstaaten :
**DE FR GB IT**

(56) Entgegenhaltungen :
**EP-A- 0 013 312**
**DE-A- 1 539 907**
**DE-A- 2 126 399**

(56) Entgegenhaltungen :
**DE-A- 2 436 443**
**DE-A- 2 453 990**
**DE-A- 2 931 536**
**DE-C- 909 217**
**DE-C- 975 024**
**FR-A- 2 246 950**
**G. Seidel, "Gedruckte Schaltungen - Techno-**
**logie und Technik", Berliner Union Stuttgart**
**und Verlag Technik Berlin, 1959,Seiten 41, 178**
**und 179**

(73) Patentinhaber : **SIEMENS**
**AKTIENGESELLSCHAFT**
**Wittelsbacherplatz 2**
**W-8000 München 2 (DE)**

(72) Erfinder : **Erhardt, Werner, Dipl.-Ing. (FH)**
**Triebweg 4**
**W-7901 Ballendorf (DE)**
Erfinder : **Hübscher, Wilhelm, Dipl.-Ing. (FH)**
**Rüblingerstrasse 41**
**W-7929 Gerst.-Heldenfingen (DE)**

EP 0 187 921 B2

**EP 0 187 921 B2**

## Beschreibung

Die Erfindung betrifft einen elektrischen Kondensator, der in ein Gehäuse eingebaut ist und eine Abschaltvorrichtung besitzt, die den Kondensator bei unzulässigem Druckanstieg im Gehäuse von einer Stromquelle trennt, wobei die Überdrucksicherung als Abreißstreifen mit Sollbruchstelle ausgebildet ist.

Kondensatoren, insbesondere regenerierfähige Leistungskondensatoren werden grundsätzlich mit Überdruckabreißsicherungen versehen. Diese Sicherungen sollen verhindern, daß das Kondensatorgehäuse aufplatzt, wenn der Kondensator durch unzulässige Überlastung oder am Ende seiner Lebensdauer in einem kritischen Zustand kommt. Hierbei wird durch die Selbstheilprozesse Gas erzeugt, wodurch im inneren des Gehäuses ein Druck aufgebaut wird, der die Abreißsicherung betätigt.

Eine derartige Überdruckabreißsicherung ist beispielsweise in der DE-PS 975 024 beschrieben. Dort ist in eine Kondensatorzuleitung ein metallischer Abreißstreifen mit einer Sollbruchstelle unter Spannung eingebaut. Bei Druckanstieg im Gehäuseinneren wird beispielsweise der Gehäuseboden nach außen gewölbt, wodurch der Abreißstreifen an der vorbestimmten Sollbruchstelle durchtrennt und damit der Kondensator von einer äußeren Stromquelle abgeschaltet wird.

Der geschilderte Vorgang, der zum Ansprechen der Abreißsicherung führt, läuft im allgemeinen langsam ab, so daß herkömmliche Überstromsicherungen für diesen Zweck nicht herangezogen werden können. Andererseits ist es wünschenswert, bei hohen Einschaltströmen oder bei einem Kurzschluß, wobei die geschilderten Vorgänge im Millisekundenbereich ablaufen, die genannten kritischen Zustände zu vermeiden. Hierzu ist es erforderlich, zusätzlich zur mechanischen Abreißsicherung noch eine elektrische Überstromsicherung in Reihe zu schalten.

Zur Absicherung der Kondensatoren gegen die angeführten Überlastströme und unzulässige Einschaltströme bzw. Kurzschlüsse werden Schaltschütze, Sicherungen (Schmelzsicherung) oder Drosseln verwendet.

Es ist somit erforderlich, zwei unterschiedliche Sicherungen im Kondensator anzuordnen, wodurch einerseits zusätzliche Bauteilekosten und andererseits zusätzliche Herstellungskosten anfallen.

Aufgabe der Erfindung ist es, eine Abschaltvorrichtung für einen Kondensator der eingangs genannten Art anzugeben, die beide Sicherungsfunktionen vereinigt, sowie preisgünstig herzustellen und einzubauen ist.

Diese Aufgabe wird erfindungsgemäß mit den Merkmalen des Anspruchs 1 gelöst.

Der Vorteil der Erfindung besteht darin, daß nur noch ein einziges Bauteil erforderlich ist, das beide Sicherungsfunktionen übernimmt, und das sowohl preisgünstig herzustellen als auch preisgünstig einzubauen ist.

Die Stromsicherung kann hierbei sowohl durch den Querschnitt der Sollbruchstelle festgelegt sein, als auch durch eine geätzte Leiterbahn gebildet werden.

Es is vorteilhaft, daß die geschilderte Abschaltvorrichtung derart ausgebildet werden kann, daß insbesondere beim Einsatz in Phasenschieber-Kondensatoren die Absicherung für jede einzelne Phase gemeinsam auf einer Leiterplatte angeordnet werden kann.

Gemäß einer Weiterbildung ist der Abreißstreifen unter Biegebeanspruchung im Kondensator angeordnet.

Vorteilhafte Ausgestaltungen bestehen darin, daß die Anschluß- und Verschaltdrähte in der Leiterplatte durch angequetschte oder gestauchte verlötete Enden auszugsfest befestigt sind, wobei gegebenenfalls zusätzliche elektrische Bauelemente auf der Leiterplatte angeordnet sein können.

Die Erfindung wird anhand der folgenden Ausführungsbeispiele näher erläutert.

In der dazugehörenden Zeichnung zeigen:

Fig. 1 den Prinzipaufbau eines Kondensators mit Abschaltvorrichtung,

Fig. 2 den Kondensator nach Ansprechen der Abreißsicherung,

Fig. 3 bis Fig. 12 verschiedene Ausführungsformen des Abreißstreifens mit Stromsicherung,

Fig. 13 den Einbau eines Abreißstreifens mit Stromsicherung in einem Phasenschieber-Kondensator.

Fig. 14 und Fig. 16 Abreißstreifen, die an der Schoopschicht des Kondensatorwickels befestigt sind,

Fig. 15 und Fig. 17 einen vergrößerten Ausschnitt aus Fig. 14 und Fig. 16,

Fig. 18 den Einbau einer Abschaltvorrichtung in einen Phasenschieber-Kondensator und

Fig. 19 und Fig. 20 ausschnittsweise Vergrößerungen der Fig. 18.

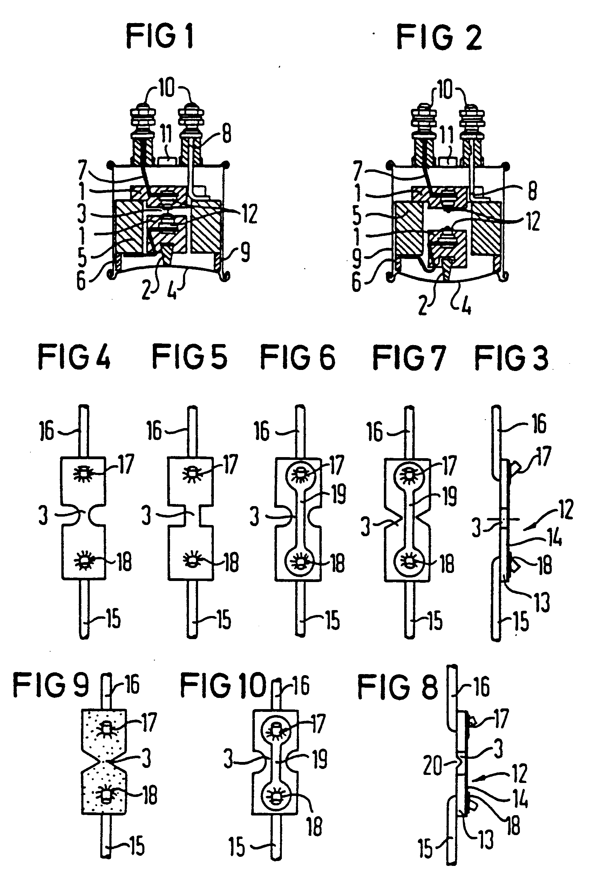

In der Fig. 1 ist im Prinzip dargestellt, wie ein Kondensatorwickel 5 in einem Gehäuse 9 mit zweipoligem Anschluß 10 angeordnet ist. Das Gehäuse 9 weist einen Gehäuseboden 4 auf, der als Arbeitsmembran ausgebildet ist. Am Gehäuseboden 4 ist ein Spannband 2 befestigt, das in eine isolierende Spannvorrichtung 1 eingreift. In der isolierenden Spannvorrichtung 1 ist ein Abreißstreifen 12 mit Sollbruchstelle 3 eingespannt. Eine Wickelabstützung 6 sorgt dafür, daß ein Zwischenraum zwischen Kondensatorwickel 5 und Gehäuseboden 4 zur Vermeidung von Kurzschlüssen entsteht. Der Abreißstreifen 12 ist in die gesicherte Zuleitung 7 des Kondensators eingebaut, während die zweite Wickelzuleitung 8 ungesichert ist. Zwischen den Anschlüssen 10 ist ein Gehäuseanschluß 11 angeordnet.

2

In der Fig. 2 ist dargestellt, daß beim Entstehen eines Druckes im Gehäuse 9 der Gehäuseboden 4 nach außen gewölbt wird, wodurch der Abreißstreifen 12 an der Sollbruchstelle aufgetrennt und damit der Kondensatorwickel von einer äußeren Stromquelle getrennt wird.

In der Fig. 3 ist eine Seitenansicht eines Abreißstreifens 12 dargestellt. Der Abreißstreifen 12 besteht aus einer isolierenden Leiterplatte 13, die mit einem elektrisch leitfähigen Material 14 belegt, beispielsweise kaschiert, ist. Zum Einspannen ist die Leiterplatte 13 mit dem Metallüberzug 14 beispielsweise mit zwei Löchern versehen, in die elektrische Zuleitungen 15, 16 eingehängt und mit dem Metallüberzug 14 an den Stellen 17, 18 verlötet sind. In der Mitte des Abreißstreifens 12 ist die Sollbruchstelle 3 angeordnet. In den Fig. 4 und 5 sind Ausführungsformen des Abreißstreifens 12 dargestellt, bei dem die Sollbruchstelle 3 durch kreis- bzw. rechteckförmiges Sägen, Stanzen (mechanisches Abtragen), Pressen, Ätzen oder ähnlichem Materialabtrag hergestellt ist. Bei diesen Ausführungsformen ist die Engstelle 3 gleichzeitig die Stromsicherungs- und Abreißstelle. Die Variation der Abreißkraft wird durch die Dicke und die Art des Trägermaterials (Leiterplatte) bestimmt, nachdem zuvor der Querschnitt der elektrischen Stromsicherung (abhängig vom Material, das im allgemeinen Kupfer ist, und der Materialstärke) festgelegt wurde. Die Abreißkraft der Leiterplatte kann durch verschiedene Füllstoffe, wie z. B. Glasseidenmatte, Gesteinsmehl, Stoffgewebe, mitbestimmt werden.

Neben den in den Fig. 3 bis 5 dargestellten Ausführungsbeispielen mit einseitig kaschierten Leiterplatten können auch beidseitig kaschierte Leiterplatten verwendet werden, wodurch beispielsweise die Sollbruchstelle (wegen der höheren elektrischen Leitfähigkeit der beidseitigen Metallbahnen) mit einem engeren Querschnitt versehen werden kann.

In den Fig. 6 und 7 sind Ausführungsbeispiele von Abreißstreifen dargestellt, bei denen die Überstromsicherung in Form einer geätzten Leiterbahn 19 vorliegt, die zwischen den Anschlußelementen 16 und 17 angeordnet ist. Hierdurch ergeben sich bessere Gestaltungsmöglichkeiten für die Abschaltvorrichtung, da die Sollbruchstelle 3 für die Überdruckabreißsicherung und die Metallbahn 19 für die Uberstromsicherung unabhängig von einander dimensioniert werden können. Es ist auch nicht erforderlich, daß die in den Figuren dargestellte lineare Form der Leiterbahn 19 verwendet wird, sondern es können auch beliebige Ätzbilder angewendet werden, wie beispielsweise eine Mäanderform, wenn ein höherer elektrischer Widerstand der Überstromsicherung gewünscht wird.

In der Fig. 8 ist eine weitere Ausführungsform eines Abreißstreifens 12 dargestellt, der aus einer Leiterplatte 13 mit einseitiger Metallkaschierung 14 besteht. Zusätzlich zur Sollbruchstelle 3 ist auf der unkaschierten Seite der Leiterplatte 13 quer zur Abreißrichtung eine zusätzliche Engstelle 20 angeordnet, wodurch eine weitere Beeinflussung der Abreißkraft ergolgen kann.

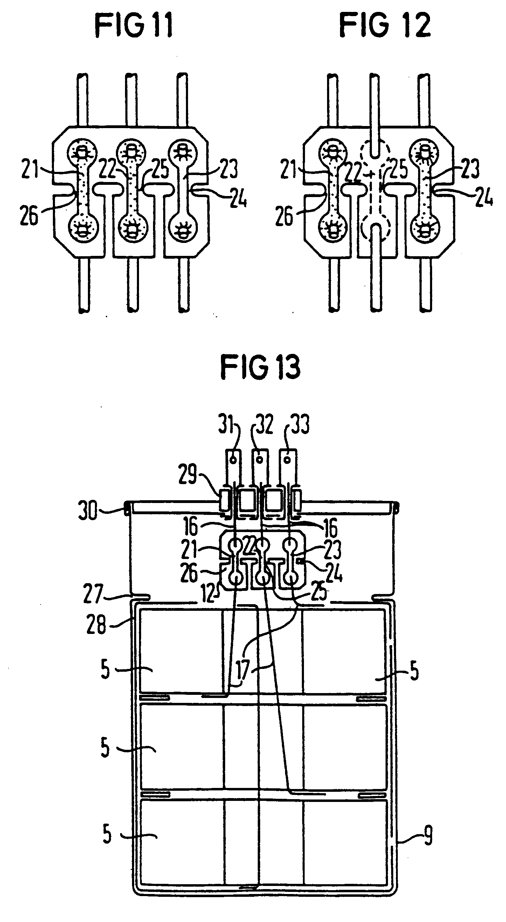

In den Fig. 9 und 10 sind Ansichten eines Abreißstreifens 12 wiedergegeben, der gemäß Fig. 8 auf der Rückseite die zusätzliche Engstelle aufweist. Fig. 9 zeigt den Fall der ganzflächig kaschierten Leiterplatte, wo die Engstelle 3 gleichzeitig die Uberstromsicherung und die Abreißsicherung festlegt, wogegen Fig. 10 den Abreißstreifen darstellt, bei dem die geätzte Leiterbahn 19 die Überstromsicherung bestimmt.

In den Fig. 11 und 12 sind Ausführungsformen von Abreißstreifen dargestellt, die zum Einsatz bei Phasenschieber-Kondensatoren geeignet sind, wo jede Phase mit einer Stromsicherung und Abreißsicherung versehen werden soll. Fig. 11 zeigt einen Abreißstreifen mit einseitig beschichteter Leiterplatte und in Fig. 12 ist eine zweiseitig beschichtete Leiterplatte dargestellt. Als Stromsicherungen dienen drei geätzte Leiterbahnen 21, 22, 23 und als Abreißsicherung dienen die Sollbruchstellen 24, 25 und 26.

In der Fig. 13 ist dargestellt, wie die Abschaltvorrichtung gemäß den Fig. 11 und 12 in einem Phasenschieber-Kondensator angeordnet ist. Der Kondensator weist drei Wickel 5 auf und ist in ein Gehäuse 9 eingebaut, welches eine Dehn- und Faltensicke 27 besitzt, die gleichzeitig zum Festlegen der Kondensatorwickel 5 dient. Zur Isolierung der Kondensatorwickel 5 gegen das Gehäuse 9 ist eine Isolier- und Haltekappe 28 angeordnet. Das Gehäuse 9 ist mit einem Gehäusedeckel 29 verschlossen und durch einen Doppelfalz 30 hermetisch abgedichtet ist. Im Gehäusedeckei 29 sind elektrisch isoliert drei Anschlüsse 31, 32, 33 angeordnet, die über die Anschlußdrähte 16 mit der Abschaltvorrichtung 12 verbunden sind. Die Abschaltvorrichtung 12 weist als Abreißsicherung die Sollbruchstellen 24, 25, 26 und als Stromsicherung die geätzten Leiterbahnen 21, 22, 23 auf. Mittels der Anschluß- und Verschaltdrähte 17 erfolgt der Anschluß der Kondensatorwickel 5.

Die Abschaltvorrichtung ist unter Vorspannung in das Gehäuse 9 eingebaut. Bei Druckanstieg im Inneren des Gehäuses erfolgt ein Aufbiegen der Dehn- und Faltensicken 27 wodurch der Abreißstreifen 12 an den Sollbruchstellen 24 bis 26 durchtrennt wird. Bei unzulässigen Überströmen schmelzen die Leiterbahnen 21 bis 23.

Die Fig. 11 bis 13 zeigen deutlich, daß die erfindungsgemäße Abschaltvorrichtung wesentlich preisgünstiger als die herkömmlichen Sicherungselemente sind, da bisher in Phasenschieberkondensatoren drei einzelne Abreißsicherungen und drei einzelne Überstromsicherungen also zusammen sechs Sicherungen, eingebaut werden muhten, wodurch auch die Herstellungskosten wesentlich höher ausfielen.

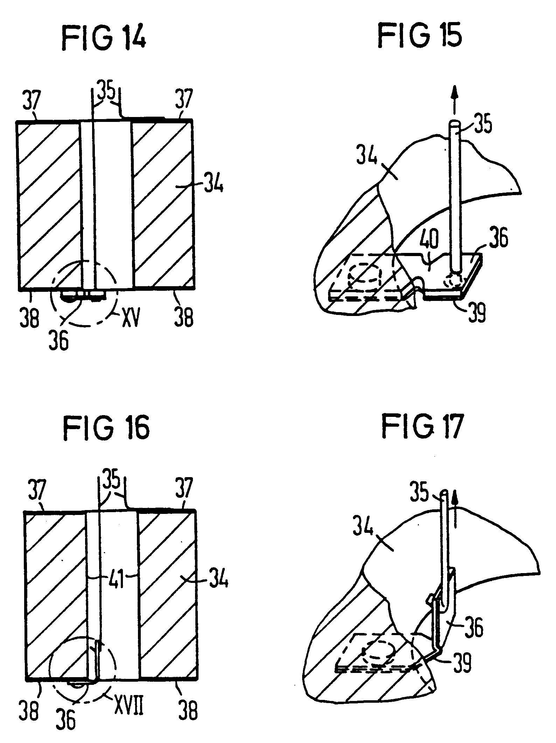

In der Fig. 14 ist das Schnittbild eines Kondensatorwickels 34 dargestellt, der mit Stirnkontaktschichten 37, 38 versehen ist. Die elektrische Zuleitung erfolgt über Anschlußdrähte 35. Der eine dieser Anschlußdrähte 35 ist direkt mit der Stirnkontaktschicht 37 verbunden, während die Verbindung der Stirnkontaktschicht 38 mit dem anderen Anschlußdraht über die Abschaltvorrichtung 36 erfolgt, die in geeigneter Weise, z. B. durch Schweißen oder Nieten an der Stirnkontaktschicht 38 befestigt ist.

In der Fig. 15 ist ein vergrößerter Ausschnitt der Abschaltvorrichtung 36 in perspektivischer Darstellung gezeigt. Die Abschaltvorrichtung 36 besteht aus einer isolierenden Leiterplatte, die mit einem elektrisch leitfähigen Material 39 beschichtet ist und eine Sollbruchstelle 40 besitzt.

Der Abreißstreifen 36 ist im Kondensator so eingebaut, daß eine Zugbeanspruchung in Pfeilrichtung erfolgt. Bei entstehendem Überdruck im Kondensator wird damit der Abreißstreifen 36 gebogen und bricht an der Sollbruchstelle 40 bis der elektrische Anschluß unterbrochen ist. Die elektrisch leitende Schicht 39 wird dabei vorzugsweise an der Stelle der größten Dehnung angeordnet.

In der Fig. 16 ist ein Ausführungsbeispiel dargestellt, bei dem der Abreißstreifen 36 durch eine dünne, biegsame Leiterplatte von z. B. ca. 0,5 mm Dicke gebildet wird. Hierbei erfolgt der Einbau derart, daß der Abreißstreifen 36 beim Einbau um ca. 90° in das Kernrohr 41 des Kondensator-wickels 34 abgebogen wird.

In der Fig. 17 ist eine vergrößerte Darstellung des Abreißstreifens 36 angeführt, bei der die Zugbeanspruchung wieder in Pfeilrichtung erfolgt. Im Gegensatz zum vorhergehenden Ausführungsbeispiel mit starrer Leiterplatte kann bei flexibler Leiterplatte die elektrisch leitende Schicht 39 beliebig vorgesehen werden.

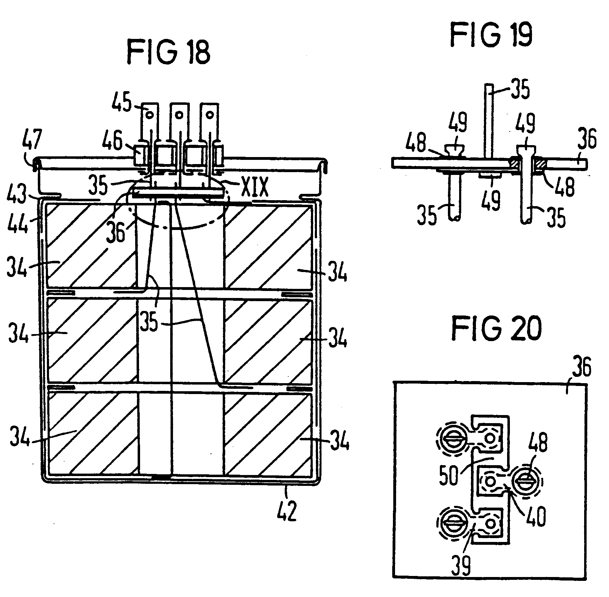

In der Fig. 18 ist dargestellt, wie die Abschaltvorrichtung 36 in einem Phasenschieber-Kondensator angeordnet ist. Die Abschaltvorrichtung 36 ist hierbei waagerecht eingesetzt, was eine deutliche Reduzierung der Kondensatorlänge ermöglicht. Zusätzlich können auf der Leiterplatte im Bedarfsfall auf einfache Weise auch elektrische Bauelemente wie beispielsweise Widerstände, Drosseln, Kondensatoren usw. verschaltet werden.

Der Phasenschieberkondensator gemäß Fig. 18 weist drei Kondensatorwickel 34 auf und ist in ein Gehäuse 42 eingebaut, welches eine Dehn- und Faltensicke 43 besitzt, die gleichzeitig zum Festlegen der Kondensatorwickel 34 dient. Zur Isolierung der Kondensatorwickel 34 gegen das Gehäuse 42 ist eine Isolier- und Haltekappe 44 angeordnet. Das Gehäuse 42 ist mit einem Gehäusedeckel 46 verschlossen und durch einen Doppelfalz 47 hermetisch abgedichtet. Im Gehäusedeckel 46 sind elektrisch isoliert drei Anschlüsse 45 angeordnet, die über Anschlußdrähte 35 mit der Abschaltvorrichtung 36 verbunden sind.

In der Fig. 19 ist die Abschaltvorrichtung 36 vergrößert dargestellt. Dort ist zu erkennen, daß die Anschluß- und Verschaltdrähte 35 in der Leiterplatte 36 auszugsfest befestigt sind, was durch angequetschte oder gestauchte Enden 49 erfolgt, die zusätzlich verlötet bzw. mit Rohrnieten 48 verankert sind. Die Auszugskraft der Drähte 35 muß selbstverständlich größer als die Abreißkraft der Leiterplatte 36 an der Sollbruchstelle sein.

In der Fig. 20 ist eine Draufsicht auf die Leiterplatte 36 gemäß Fig. 19 dargestellt. Dort ist zu erkennen, daß die erforderlichen Sollbruchstellen 40 in der Leiterplatte 36 dadurch erzeugt werden, daß durch einen einzigen Stanzvorgang eine Aussparung 50 erzeugt wird, wodurch die erforderlichen Engstellen 40 hergestellt werden. Die elektrischen Leiterbahnen 39 für die Überstromsicherungen können an der Unter- oder Oberseite oder auch beidseitig angebracht sein.


**Patentansprüche**

1. Elektrischer Kondensator, der in einem Gehäuse eingebaut ist und eine Abschaltvorrichtung besitzt, die den Kondensator bei unzulässigem Druckanstieg im Gehäuse von einer Stromquelle trennt, wobei die Überdrucksicherung als Abreißstreifen mit Sollbruchstelle ausgebildet ist, dadurch gekennzeichnet, daß der Abreißstreifen (12) als isolierende mit einem leitfähige Material (14) beschichtete Leiterplatte (13) ausgebildet ist und daß das leitfähige Material (14) zusätzlich eine Stromsicherung darstellt, die den Kondensator (5) bei Überlastströmen von der Stromquelle freischaltet.

2. Elektrischer Kondensator nach Anspruch 1, dadurch gekennzeichnet, daß die Stromsicherung durch den Querschnitt der Sollbruchstelle (3 ; 24, 25, 26) festgelegt ist.

3. Elektrischer Kondensator nach Anspruch 1, dadurch gekennzeichnet, daß die Stromsicherung durch eine geätzte Leiterbahn (19 ; 21, 22, 23) gebildet ist.

4. Elektrischer Kondensator nach einem der Ansprüche 1 bis 3, dadurch gekennzeichnet, daß die Leiterplatte beidseitig beschichtet ist.

5. Elektrischer Kondensator nach einem der Ansprüche 1 bis 3, dadurch gekennzeichnet, daß die Leiterplatte (13) im Bereich der Sollbruchstelle (3) auf der nicht beschichteten Oberfläche eine zusätzliche Engstelle (20) besitzt.

6. Elektrischer Kondensator, insbesondere Phasenschieber-Kondensator, nach einem der Ansprüche 1 bis 5, dadurch gekennzeichnet, daß die Abreiß- und Stromsicherungen für jede einzelne Phase gemeinsam auf einer Leiterplatte angeordnet sind.

7. Elektrischer Kondensator nach einem der Ansprüche 1 bis 6, dadurch gekennzeichnet, daß der Abreißstreifen (36) unter Biegebeanspruchung im Kondensator angeordnet ist.

8. Elektrischer Kondensator nach Anspruch 7, dadurch gekennzeichnet, daß die Anschluß- und Verschaltdrähte (35) in der Leiterplatte (36) durch angequetschte oder gestauchte verlötete Enden (49) auszugsfest befestigt sind.

9. Elektrischer Kondensator nach Anspruch 6 oder 7, dadurch gekennzeichnet, daß auf der Leiterplatte (36) zusätzlich elektrische Bauelemente angeordnet sind.

10. Elektrischer Kondensator nach einem der Ansprüche 7 bis 9, dadurch gekennzeichnet. daß die elektrisch leitende Schicht (39) an der Stelle der größten Dehnung angeordnet ist.

## Claims

1. Electrical capacitor, which is installed in a container and has a disconnecting device, which disconnects the capacitor from a current source when there is an impermissible pressure rise in the container, the pressure relief device being constructed as a disconnection strip with pressure-relief joint, characterised in that the disconnection strip (12) is constructed as an insulating printed circuit board (13) coated with a conductive arterial (14), and in that in addition the conductive material (14) represents a fuse which isolates the capacitor (5) from the current source when overload currents arise.

2. Electrical capacitor according to Claim 1, characterised in that the fuse is located by the cross-section of the pressure-relief joint (3;24,25,26).

3. Electrical capacitor according to Claim 1, characterised in that the fuse is formed by an etched conductor track (19;21,22,23).

4. Electrical capacitor according to one of Claims 1 to 3, characterised in that the printed circuit board is coated on both sides.

5. Electrical capacitor according to one of Claims 1 to 3, characterised in that in the region of the pressure-relief joint (3) the printed circuit board (13) has an additional constriction (20) on the non-coated surface.

6. Electrical capacitor, especially a power-factor correction capacitor, according to one of Claims 1 to 5, characterised in that for each individual phase the internal overpressure disconnectors and fuses are arranged together on a printed circuit board.

7. Electrical capacitor according to one of Claims 1 to 6, characterised in that the disconnection strip (36) is arranged in the capacitor under bending stress.

8. Electrical capacitor according to Claim 7, characterised in that the connecting and circuit wires (35) are secured non-extractably in the printed circuit board (36) by means of crimped or headed soldered ends (49).

9. Electrical capacitor according to Claims 6 or 7, characterised in that in addition electrical components are arranged on the printed circuit board (36).

10. Electrical capacitor according to one of Claims 7 to 9, characterised in that the electrically conductive layer (39) is arranged at the site of greatest extension.

## Revendications

1. Condensateur électrique qui est monté dans un boîtier et qui possède un dispositif de débranchement qui sépare le condensateur d'une source de courant dans le cas d'un accroissement inadmissible de la pression dans le bottier, le dispositif de sécurité contre les surpressions étant réalisé sous la forme d'une bande de rupture à emplacement de rupture de consigne, caractérisé par le fait que la bande de rupture (12) est réalisée sous la forme d'une plaquette isolante (13) revêtue d'un matériau (14) conducteur, et que le matériau (14) conducteur constitue, en outre, un fusible qui sépare le condensateur (5) de la source de courant, en cas de surintensités.

2. Condensateur électrique selon la revendication 1, caractérisé par le fait que le fusible est déterminé par la section transversale de l'amorce de rupture (3; 24, 25, 26).

3. Condensateur électrique selon la revendication 1, caractérisé par le fait que le fusible est formé par une piste conductrice (19; 21, 22, 23) obtenue par corrosion.

4. Condensateur électrique selon l'une des revendications 1 à 3, caractérisé par le fait que la plaquette est revêtue sur ses deux faces.

5. Condensateur électrique selon l'une des revendications 1 à 3, caractérisé par le fait que la plaquette (13) comporte, dans la zone de l'emplacement de rupture de consigne(3), sur la surface dépourvue de revêtement, un étranglement supplémentaire (20).

6. Condensateur électrique, en particulier condensateur-déphaseur, suivant l'une des revendications 1 à 5, caractérisé par le fait que les dispositifs de sécurité par rupture et les fusibles sont disposés, en commun et pour chaque phase individuelle, sur une plaquette.

7. Condensateur électrique selon l'une des revendications 1 à 6, caractérisé par le fait que la bande de rupture (36) est disposée dans le condensateur, avec contrainte en flexion.

8. Condensateur électrique selon la revendication 7, caractérisé par le fait que les fils de branchement et des circuits (35) sont fixés, de façon à résister à l'arrachement, dans la plaquette (36) par des extrémités soudées (49), serties ou matées.

9. Condensateur électrique selon la revendication 6 ou 7, caractérisé par le fait que sur la plaquette (36) sont disposés des composants électriques supplémentaires.

10. Condensateur électrique selon l'une des revendications 7 à 9, caractérisé par le fait que la couche électriquement conductrice (39) est disposée à l'emplacement du plus grand allongement.

## FIG 1

## FIG 2

## FIG 4   FIG 5   FIG 6   FIG 7   FIG 3

## FIG 9   FIG 10   FIG 8

# FIG 11

# FIG 12

# FIG 13

## FIG 14

## FIG 15

## FIG 16

## FIG 17

## FIG 18

## FIG 19

## FIG 20